# EUROPÄISCHE PATENTSCHRIFT

(11) **EP 3 031 688 B1**
(45) Veröffentlichungstag und Bekanntmachung des Hinweises auf die Patenterteilung: **22.09.2021**
(21) Anmeldenummer: 15002864.5
(22) Anmeldetag: 07.10.2015
(51) Int. Cl.: B60W 30/14, B60W 10/06, B60W 10/18, B60W 50/00, B60W 30/18, B60W 50/16

(54) **VERFAHREN UND VORRICHTUNG ZUR UNTERSTÜTZUNG EINES FAHRERS EINES FAHRZEUGS, INSBESONDERE EINES NUTZFAHRZEUGS**
DEVICE AND METHOD FOR SUPPORTING A DRIVER OF A VEHICLE, IN PARTICULAR A COMMERCIAL VEHICLE
PROCÉDÉ ET DISPOSITIF D'ASSISTANCE D'UN CONDUCTEUR D'UN VÉHICULE AUTOMOBILE, EN PARTICULIER D'UN VÉHICULE UTILITAIRE

(30) Priorität: 10.12.2014 DE 102014018368
(43) Veröffentlichungstag der Anmeldung: 15.06.2016
(73) Patentinhaber: MAN Truck & Bus SE, 80995 München (DE)
(72) Erfinder: Heyes, Daniel, 81247 München (DE); Zimmermann, Andreas, 80995 München (DE); Drimml, Peter, 85221 Dachau (DE); Huber, Martin, 81243 München (DE); Jerg, Stefan, 80805 München (DE); Feldmeier, Daniel, 82152 Planegg (DE)
(74) Vertreter: Liebl, Thomas

(56) Entgegenhaltungen:
- WO-A1-03/051662
- WO-A1-2010/144027
- WO-A1-2013/095242
- DE-A1-102008 019 174
- DE-A1-102008 039 950

## Beschreibung

Die Erfindung betrifft ein Verfahren zur Unterstützung eines Fahrers eines Fahrzeugs, insbesondere eines Nutzfahrzeugs, nach dem Oberbegriff des Patentanspruches 1, eine Vorrichtung zur Unterstützung eines Fahrers eines Fahrzeugs, insbesondere eines Nutzfahrzeugs, nach dem Oberbegriff des Patentanspruches 11 und ein Fahrzeug, insbesondere ein Nutzfahrzeug zur Durchführung des Verfahrens und/oder mit der Vorrichtung nach Patentanspruch 12.

Es ist bekannt, bei Fahrzeugen, insbesondere bei Nutzfahrzeugen, eine Regel- und/oder Steuereinrichtung vorzusehen, mittels der die Geschwindigkeit des Fahrzeuges derart begrenzt werden kann, dass ein vom Fahrer des Fahrzeugs eingestellter Geschwindigkeits-Grenzwert nicht überschritten wird. Eine derartige Regel- und/oder Steuereinrichtung, wie in WO 03/051662 A1 beschrieben, wird häufig als "Limiter" bezeichnet. Die Regel- und/oder Steuereinrichtung ist dabei regelmäßig derart ausgebildet, dass der Fahrer zwar nicht schneller, jedoch langsamer als mit dem eingestellten Geschwindigkeits-Grenzwert fahren kann. Der Fahrer kann beispielsweise dann langsamer fahren, wenn er mit einem Gaspedal des Fahrzeugs weniger Gas gibt, als es zum Fahren mit dem eingestellten Geschwindigkeits-Grenzwert erforderlich wäre. Sofern der Fahrer mehr Gas gibt, als es zum Fahren mit dem eingestellten Geschwindigkeits-Grenzwert erforderlich wäre, erhöht sich die Fahrzeuggeschwindigkeit jedoch nicht über den eingestellten Geschwindigkeits-Grenzwert hinaus. Zur Begrenzung der Geschwindigkeit kann bei einer als Brennkraftmaschine ausgebildeten Antriebseinrichtung zum Antreiben des Fahrzeugs beispielsweise die der Brennkraftmaschine zugeführte Kraftstoffmenge begrenzt werden.

Je nach Verkehrssituation des Fahrzeugs kann es erforderlich bzw. vorteilhaft sein, den eingestellten Geschwindigkeits-Grenzwert zu verändern. Eine derartige Veränderung nimmt der Fahrer des Fahrzeugs üblicherweise manuell vor.

Aufgabe der Erfindung ist es, ein Verfahren und eine Vorrichtung zur Unterstützung eines Fahrers eines Fahrzeugs, insbesondere eines Nutzfahrzeugs, bereitzustellen, mittels denen die Begrenzung der Fahrzeuggeschwindigkeit auf einfache Weise verbessert und/oder erweitert wird.

Die Aufgabe wird mit den Merkmalen der unabhängigen Ansprüche gelöst. Bevorzugte Weiterbildungen sind in den Unteransprüchen offenbart.

Gemäß Patentanspruch 1 wird ein Verfahren zur Unterstützung eines Fahrers eines Fahrzeugs, insbesondere eines Nutzfahrzeugs, vorgeschlagen, wobei das Fahrzeug eine Regelund/oder Steuereinrichtung aufweist, mittels der die Fahrzeuggeschwindigkeit derart begrenzt wird, das sie wenigstens einen definierten, vom Fahrer des Fahrzeugs eingestellten Geschwindigkeits-Grenzwert nicht überschreitet. Erfindungsgemäß ist eine Verkehrssituation-Erkennungseinrichtung vorgesehen, mittels der eine zukünftige Verkehrssituation des Fahrzeugs erkannt und/oder erfasst wird. Beim Erkennen wenigstens einer definierten zukünftigen Verkehrssituation mittels der Verkehrssituations-Erkennungseinrichtung erhöht oder verringert die Regel- und/oder Steuereinrichtung dann zu einem definierten Zeitpunkt, zeitlich gesehen, vor der definierten zukünftigen Verkehrssituation wenigstens einen vom Fahrer eingestellten Geschwindigkeits-Grenzwert in Abhängigkeit von der definierten zukünftigen Verkehrssituation selbsttätig. Zeitlich gesehen, spätestens nach der definierten zukünftigen Verkehrssituation stellt die Regel- und/oder Steuereinrichtung dann den erhöhten oder verringerten Geschwindigkeits-Grenzwert selbsttätig wieder auf den vom Fahrer eingestellten Geschwindigkeits-Grenzwert zurück.

Auf diese Weise wird die Begrenzung der Fahrzeuggeschwindigkeit auf einfache Weise verbessert bzw. erweitert, da der Geschwindigkeits-Grenzwert nun, zeitlich gesehen, vor der definierten zukünftigen Verkehrssituation selbsttätig bzw. automatisch derart mittels der Regel- und/oder Steuereinrichtung verändert wird, dass das Fahrzeug während der definierten zukünftigen Verkehrssituation eine für die definierte zukünftige Verkehrssituation optimale Geschwindigkeit aufweist. Dadurch kann beispielsweise zuverlässig und komfortabel sichergestellt werden, dass das Fahrzeug zukünftig geltende Geschwindigkeitsvorschriften einhält. Der Fahrer des Fahrzeugs muss somit den eingestellten Geschwindigkeits-Grenzwert nicht mehr selbst ändern, wenn dies erforderlich bzw. vorteilhaft ist. Insbesondere muss der Fahrer auch nicht mehr den optimalen Zeitpunkt abschätzen, zu dem er den Geschwindigkeits-Grenzwert ändern muss, damit das Fahrzeug beim Eintreten der zukünftigen Verkehrssituation die für die zukünftige Verkehrssituation optimale Geschwindigkeit aufweist. Weiter wird mit dem erfindungsgemäßen Verfahren die Begrenzung der Fahrzeuggeschwindigkeit auch auf besonders einfache Weise verbessert bzw. erweitert, da lediglich der vom Fahrer eingestellte Geschwindigkeits-Grenzwert für einen definierten Zeitraum mittels der Regelund/oder Steuereinrichtung geändert wird.

Bevorzugt ist der wenigstens eine Geschwindigkeits-Grenzwert als Abriegelgeschwindigkeits-Grenzwert ausgebildet. Sofern dann das Fahrzeug aktuell mittels einer Antriebseinrichtung, insbesondere einer Brennkraftmaschine, des Fahrzeugs zum Antreiben des Fahrzeugs angetrieben wird, wird die Antriebseinrichtung derart mittels der Regel- und/oder Steuereinrichtung abgeriegelt, dass die Fahrzeuggeschwindigkeit den Abriegelgeschwindigkeits-Grenzwert nicht überschreitet. So kann die Fahrzeuggeschwindigkeit bei den vorwiegend auftretenden Verkehrssituationen, bei denen das Fahrzeug mittels der Antriebseinrichtung angetrieben wird, einfach und zuverlässig begrenzt werden.

Alternativ und/oder zusätzlich kann der wenigstens eine Geschwindigkeits-Grenzwert auch als Bremsgeschwindigkeits-Grenzwert ausgebildet sein. Sofern das Fahrzeug dann aktuell nicht mittels einer Antriebseinrichtung, insbesondere einer Brennkraftmaschine, des Fahrzeugs zum Antreiben des Fahrzeugs angetrieben wird, wird eine Bremseinrichtung des Fahrzeugs zum Bremsen des Fahrzeugs derart mittels der Regel- und/oder Steuereinrichtung geregelt bzw. gesteuert, dass die Fahrzeuggeschwindigkeit den Bremsgeschwindigkeits-Grenzwert nicht überschreitet. So kann die Fahrzeuggeschwindigkeit auf einfache und zuverlässige Weise begrenzt werden, wenn das Fahrzeug aktuell nicht mittels der Antriebseinrichtung angetrieben wird. Eine derartige Verkehrssituation kann beispielsweise beim Bergabfahren auftreten, wenn das Fahrzeug durch die Hangabtriebskraft beschleunigt wird.

Vorzugsweise sind mehrere Geschwindigkeits-Grenzwerte vorgesehen, wobei ein Geschwindigkeits-Grenzwert als Abriegelgeschwindigkeits-Grenzwert ausgebildet ist, und wobei ein Geschwindigkeits-Grenzwert als Bremsgeschwindigkeits-Grenzwert ausgebildet ist. Auf diese Weise kann die Fahrzeuggeschwindigkeit je nach Verkehrssituation optimal begrenzt werden. Besonders bevorzugt ist dabei der Bremsgeschwindigkeits-Grenzwert größer als der Abregelgeschwindigkeits-Grenzwert, um beispielsweise die Hangabtriebskraft besser nutzen zu können und somit den Kraftstoffverbrauch des Fahrzeugs zu senken.

Konkret kann die wenigstens eine definierte zukünftige Verkehrssituation ein zukünftig mit dem Fahrzeug erreichter Fahrstreckenabschnitt sein, bei dem die Fahrzeuggeschwindigkeit verringert werden soll. Die Regel- und/oder Steuereinrichtung verringert dann, zeitlich gesehen, vor einer derartigen Verkehrssituation wenigstens einen Geschwindigkeits-Grenzwert selbsttätig. Zeitlich gesehen, unmittelbar nach einer derartigen Verkehrssituation stellt die Regel- und/oder Steuereinrichtung dann den erhöhten Geschwindigkeits-Grenzwert selbsttätig wieder auf den vom Fahrer eingestellten Geschwindigkeits-Grenzwert zurück. Dadurch können beispielsweise zukünftig geltende Geschwindigkeitsvorschriften zuverlässig eingehalten werden. Ebenso ist es beispielsweise möglich, bei definierten zukünftigen Verkehrssituation die Fahrzeuggeschwindigkeit zu verringern, um den Kraftstoffverbrauch des Fahrzeugs während einer derartigen Verkehrssituation zu reduzieren.

Weiter kann die wenigstens eine definierte zukünftige Verkehrssituation auch eine zukünftige Erhöhung und/oder Verringerung der Steigung der Fahrstrecke des Fahrzeugs sein. Auf diese Weise kann die Fahrzeuggeschwindigkeit bereits zeitlich gesehen, vor einer derartigen Erhöhung oder Verringerung der Steigung der Fahrstrecke derart erhöht oder verringert werden, dass die Erhöhung oder Verringerung der Steigung optimal mit dem Fahrzeug bewältigt werden kann. Beispielsweise kann der Geschwindigkeits-Grenzwert, zeitlich gesehen, vor einer starken Erhöhung der Steigung erhöht werden, um mit dem Fahrzeug Schwung aufzubauen und somit Kraftstoff einzusparen und die Fahrzeit zu verringern. Ebenso kann der Geschwindigkeits-Grenzwert beispielsweise, zeitlich gesehen, vor einem Gefälle verringert werden, um Kraftstoff einzusparen. Beispielsweise kann auch, zeitlich gesehen, vor einem Ende eines Gefälles der Geschwindigkeits-Grenzwert erhöht werden, um Schwung aufzubauen und somit wiederum Kraftstoff einzusparen. Bevorzugt ist dabei vorgesehen, dass die Regel- und/oder Steuereinrichtung, zeitlich gesehen, unmittelbar vor einer derartigen Verkehrssituation oder während einer derartigen Verkehrssituation den Geschwindigkeits-Grenzwert den erhöhten oder verringerten Geschwindigkeits-Grenzwert selbsttätig wieder auf den vom Fahrer eingestellten Geschwindigkeits-Grenzwert zurückstellt.

Vorzugsweise ist wenigstens eine durch den Fahrer des Fahrzeugs betätigbare Betätigungseinrichtung vorgesehen, durch deren Betätigung die selbsttätige Erhöhung oder Verringerung des Geschwindigkeits-Grenzwerts mittels der Regel- und/oder Steuereinrichtung abgebrochen wird. Auf diese Weise kann der Fahrer des Fahrzeugs die selbsttätige Erhöhung oder Verringerung des Geschwindigkeits-Grenzwerts abbrechen, wenn er dies wünscht. Bevorzugt ist die Betätigungseinrichtung dabei als Gaspedal des Fahrzeugs ausgebildet, um die selbsttätige Erhöhung oder Verringerung des Geschwindigkeits-Grenzwerts auf einfache und komfortable Weise abbrechen zu können. Konkret kann die Erhöhung oder Verringerung des Geschwindigkeits-Grenzwerts dabei beispielsweise mittels eines sogenannten "Kick-Downs" des Gaspedals abgebrochen werden.

Bevorzugt ist eine, insbesondere haptische, Signaleinrichtung vorgesehen, mittels der dem Fahrer des Fahrzeugs signalisiert wird, dass die Regel- und/oder Steuereinrichtung den Geschwindigkeits-Grenzwert selbsttätig erhöht oder verringert hat und/oder dass die Regelund/oder Steuereinrichtung den Geschwindigkeits-Grenzwert zukünftig selbsttätig erhöhen oder verringern wird. So wird sichergestellt, dass der Fahrer des Fahrzeugs die Erhöhung oder Verringerung des Geschwindigkeits-Grenzwerts auch mitbekommt bzw. erfasst. Bevorzugt ist die Signaleinrichtung dabei als Gaspedal des Fahrzeugs ausgebildet, um dem Fahrer die Erhöhung oder Verringerung des Geschwindigkeits-Grenzwerts auf besonders zuverlässige Weise zu signalisieren.

Weiter bevorzugt ist die Verkehrssituation-Erkennungseinrichtung datenübertragend mit einem Routenerkennungssystem des Fahrzeugs verbunden, um die zukünftige Verkehrssituation des Fahrzeugs auf einfache und zuverlässige Weise mittels der Verkehrssituation-Erkennungseinrichtung erkennen zu können. Alternativ und/oder zusätzlich kann die Verkehrssituation-Erkennungseinrichtung auch eine Messeinrichtung aufweisen, mittels der die aktuelle Position des Fahrzeugs und/oder die aktuelle Fahrtrichtung des Fahrzeugs ermittelt werden kann.

Vorzugsweise ist eine durch den Fahrer des Fahrzeugs, insbesondere manuell, betätigbare Einstelleinrichtung, insbesondere ein Taster und/oder ein Schalter, vorgesehen, mittels der der wenigstens eine Geschwindigkeits-Grenzwert eingestellt wird. So kann der Geschwindigkeits-Grenzwert auf einfache Weise durch den Fahrer eingestellt werden.

Zur Lösung der bereits genannten Aufgabe wird ferner eine Vorrichtung zur Unterstützung eines Fahrers eines Fahrzeugs, insbesondere eines Nutzfahrzeugs, vorgeschlagen, wobei das Fahrzeug eine Regel- und/oder Steuereinrichtung aufweist, mittels der die Geschwindigkeit des Fahrzeugs derart begrenzt werden kann, das sie wenigstens einen definierten, von dem Fahrer des Fahrzeugs eingestellten Geschwindigkeits-Grenzwert nicht überschreitet. Erfindungsgemäß ist eine Verkehrssituation-Erkennungseinrichtung vorgesehen, mittels der eine zukünftige Verkehrssituation des Fahrzeugs erkannt und/oder erfasst werden kann. Mittels der Regel- und/oder Steuereinrichtung kann dann beim Erkennen wenigstens einer definierten zukünftigen Verkehrssituation mittels der Verkehrssituation-Erkennungseinrichtung zu einem definierten Zeitpunkt, zeitlich gesehen, vor der definierten zukünftigen Verkehrssituation wenigstens ein vom Fahrer eingestellter Geschwindigkeits-Grenzwert in Abhängigkeit von der definierten zukünftigen Verkehrssituation selbsttätig erhöht oder verringert werden. Zudem kann mittels der Regel- und/oder Steuereinrichtung der erhöhte oder verringerte Geschwindigkeits-Grenzwert dann selbsttätig wieder auf den vom Fahrer eingestellten Geschwindigkeits-Grenzwert zurückgestellt werden.

Die sich durch die erfindungsgemäße Vorrichtung ergebenden Vorteile sind identisch mit den bereits gewürdigten Vorteilen des erfindungsgemäßen Verfahrens, so dass diese an dieser Stelle nicht wiederholt werden.

Des Weiteren wird auch ein Fahrzeug, insbesondere ein Nutzfahrzeug, zur Durchführung des erfindungsgemäßen Verfahrens und/oder mit der erfindungsgemäßen Vorrichtung beansprucht. Die sich hieraus ergebenden Vorteile sind identisch mit den Vorteilen des erfindungsgemäßen Verfahrens und der erfindungsgemäßen Vorrichtung, so dass diese hier ebenfalls nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Darstellung von vorne einen Lastkraftwagen mit der erfindungsgemäßen Vorrichtung;
- Fig. 2: in einer schematischen Darstellung den Aufbau der erfindungsgemäßen Vorrichtung; und

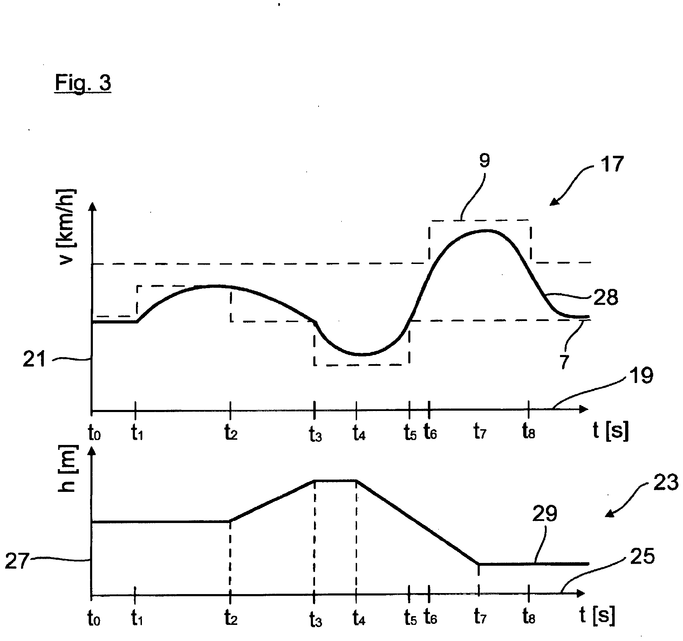

- Fig. 3: Diagramme, anhand denen eine konkrete erfindungsgemäße Verfahrensführung erläutert wird.

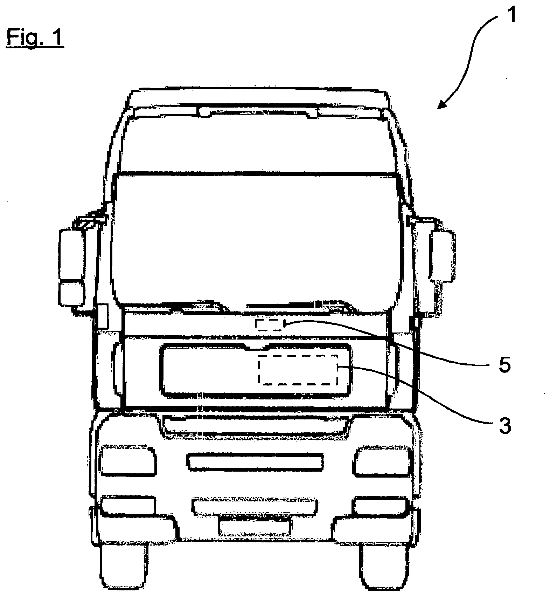

In Fig. 1 ist ein als Lastkraftwagen 1 ausgebildetes Fahrzeug gezeigt. Der Lastkraftwagen 1 weist eine in Fig. 1 mit gestrichelten Linien angedeutete Regel- und/oder Steuereinrichtung 3 auf, mittels der die Geschwindigkeit des Lastkraftwagens 1 derart begrenzt werden kann, dass sie wenigstens einen definierten, von einem Fahrer des Fahrzeugs eingestellten Geschwindigkeits-Grenzwert nicht überschreitet. Die hier beispielhaft zwei einstellbaren Geschwindigkeits-Grenzwerte können hier beispielhaft mittels einer in Fig. 1 ebenfalls mit gestrichelten angedeuteten, vom Fahrer des Lastkraftwagens 1 manuell betätigbaren Einstelleinrichtung 5 eingestellt werden.

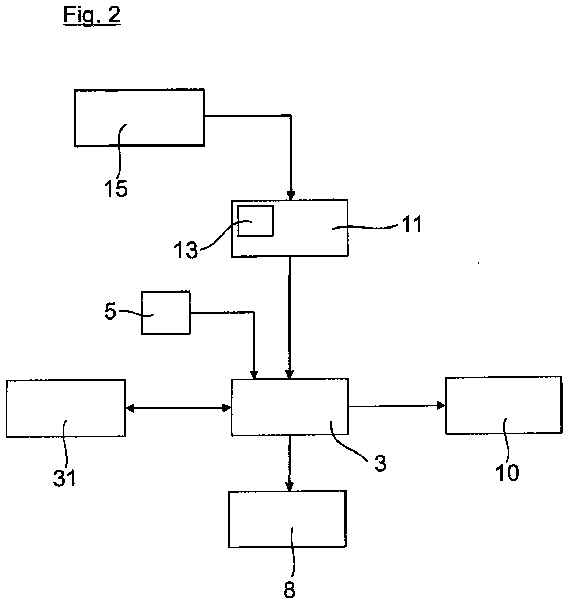

Einer der Geschwindigkeits-Grenzwerte ist hier beispielhaft als Abriegelgeschwindigkeits-Grenzwert 7 (Fig. 4) ausgebildet. Sofern der Lastkraftwagen 1 mittels einer hier beispielhaft als Brennkraftmaschine 8 (Fig. 2) ausgebildeten Antriebseinrichtung des Lastkraftwagens 1 zum Antreiben des Lastkraftwagens 1 angetrieben wird, wird die Brennkraftmaschine 8 dabei derart mittels der Regel- und/oder Steuereinrichtung 3 abgeriegelt, dass die Geschwindigkeit des Lastkraftwagens 1 den Abriegelgeschwindigkeits-Grenzwert 7 nicht überschreitet. Der andere der Geschwindigkeits-Grenzwerte ist hier beispielhaft als Bremsgeschwindigkeits-Grenzwert 9 ausgebildet. Sofern der Lastkraftwagen 1 nicht mittels der Brennkraftmaschine 8 angetrieben wird, wird eine Bremseinrichtung 10 (Fig. 2) des Lastkraftwagens 1 zum Bremsen des Lastkraftwagens 1 derart mittels der Regel- und/oder Steuereinrichtung 3 geregelt bzw. gesteuert, dass die Geschwindigkeit des Lastkraftwagens 1 den Bremsgeschwindigkeits-Grenzwert 9 nicht überschreitet.

Wie in Fig. 2 gezeigt ist, weist der Lastkraftwagen 1 eine datenübertragend mit der Regelund/oder Steuereinrichtung 3 verbundene Verkehrssituations-Erkennungseinrichtung 11 auf, mittels der eine zukünftige Verkehrssituation des Lastkraftwagens 1 erkannt bzw. erfasst werden kann. Die Verkehrssituations-Erkennungseinrichtung 11 umfasst eine Messeinrichtung 13, mittels der hier beispielhaft die aktuelle Position des Lastkraftwagens 1 und die aktuelle Fahrtrichtung des Lastkraftwagens 1 ermittelt werden können. Zudem ist die Verkehrssituations-Erkennungseinrichtung 11 hier auch datenübertragend mit einen Routenplanungssystem 15 des Lastkraftwagens 1 verbunden. Mittels der Messeinrichtung 13 und dem Routenplanungssystem 15 kann die zukünftige Verkehrssituation des Lastkraftwagens 1 zuverlässig und einfach mittels der Verkehrssituations-Erkennungseinrichtung 11 erkannt werden.

Die Regel- und/oder Steuereinrichtung 3 ist hier weiter derart ausgebildet, dass sie beim Erkennen wenigstens einer definierten zukünftigen Verkehrssituation mittels der Verkehrssituations-Erkennungseinrichtung 11 zu einem definierten Zeitpunkt, zeitlich gesehen, vor der definierten zukünftigen Verkehrssituation wenigstens einen der vom Fahrer eingestellten Geschwindigkeits-Grenzwerte 7, 9 in Abhängigkeit von der definierten zukünftigen Verkehrssituation selbsttätig erhöht oder verringert. Zeitlich gesehen, spätestens nach der definierten zukünftigen Verkehrssituation stellt die Regel- und/oder Steuereinrichtung 3 dann den wenigstens einen erhöhten oder verringerten Geschwindigkeits-Grenzwert 7, 9 selbsttätig wieder auf den vom Fahrer eingestellten Geschwindigkeits-Grenzwert zurück.

Eine definierte zukünftige Verkehrssituation ist hier beispielhaft ein zukünftig mit dem Lastkraftwagen 1 erreichter Fahrstreckenabschnitt, bei dem die Geschwindigkeit des Lastkraftwagens 1 im Vergleich zur aktuellen Geschwindigkeit des Lastkraftwagens 1 verringert werden soll. Die Regel- und/oder Steuereinrichtung 3 verringert dabei, zeitlich gesehen, vor einer derartigen Verkehrssituation wenigstens einen der Geschwindigkeits-Grenzwerte 7, 9 selbsttätig. Zeitlich gesehen, unmittelbar nach einer derartigen Verkehrssituation stellt die Regel- und/oder Steuereinrichtung 3 dann den wenigstens einen erhöhten Geschwindigkeits-Grenzwert 7, 9 selbsttätig wieder auf den vom Fahrer eingestellten Geschwindigkeits-Grenzwert 7, 9 zurück.

Eine weitere definierte zukünftige Verkehrssituation ist hier beispielhaft eine zukünftige Erhöhung und/oder Verringerung der Steigung der Fahrstrecke des Lastkraftwagens 1. Dabei stellt die Regel- und/oder Steuereinrichtung 3 hier beispielhaft, zeitlich gesehen, bereits unmittelbar vor einer derartigen Verkehrssituation oder während einer derartigen Verkehrssituation den wenigstens einen erhöhten oder verringerten Geschwindigkeits-Grenzwert 7, 9 selbsttätig wieder auf den vom Fahrer eingestellten Geschwindigkeits-Grenzwert zurück.

Die Erhöhung oder Verringerung der Geschwindigkeits-Grenzwerte 7, 9 mittels der Regelund/oder Steuereinrichtung 3 in Abhängigkeit von einer zukünftigen Erhöhung und/oder Verringerung der Fahrstreckensteigung wird nachfolgend beispielhaft anhand der Fig. 4 näher erläutert:

In Fig. 4 ist ein erstes Diagramm 17 gezeigt, bei dem auf einer x-Achse 19 eine Zeit t und auf einer y-Achse 21 eine Geschwindigkeit v aufgetragen ist. Zudem ist in Fig. 4 auch ein zweites Diagramm 23 gezeigt, bei dem auf einer x-Achse 25 ebenfalls die Zeit t und auf einer yAchse 27 eine Höhe h aufgetragen ist. In das erste Diagramm 17 sind der eingestellte Abriegelgeschwindigkeits-Grenzwert 7, der eingestellte Bremsgeschwindigkeits-Grenzwert 9 und die tatsächliche Geschwindigkeit 28 des Lastkraftwagens 1 eingetragen. In das zweite Diagramm 23 ist die Höhe bzw. das Niveau 29 der Fahrstrecke des Lastkraftwagens 1 eingetragen.

Gemäß dem ersten Diagramm 17 sind ausgehend von einem Zeitpunkt t₀ bis zu einem Zeitpunkt t₁ der Abriegelgeschwindigkeits-Grenzwert 7 und der Bremsgeschwindigkeits-Grenzwert 9 als vom Fahrer des Lastkraftwagens 1 eingestellte Geschwindigkeits-Grenzwerte ausgebildet. Gemäß dem zweiten Diagramm 23 steigt die bis zum zu einem Zeitpunkt t₂ ebene Fahrstrecke des Lastkraftwagens 1 ab dem Zeitpunkt t₂ mit einer konstanten Steigung bis zu einem Zeitpunkt t₃ an. Gemäß dem ersten Diagramm 17 wird der Abriegelgeschwindigkeits-Grenzwert 7 zu dem Zeitpunkt t₁ selbsttätig mittels der Regel- und/oder Steuereinrichtung 3 um einen definierten Wert erhöht, während der Bremsgeschwindigkeits-Grenzwert 9 unverändert bleibt. Dadurch kann der Fahrer des Lastkraftwagens 1 die Geschwindigkeit 28 des Lastkraftwagens 1 erhöhen, noch bevor die Fahrstrecke zu dem Zeitpunkt t₂ ansteigt. So kann der Fahrer vor dem Anstieg Schwung nehmen, um Kraftstoff einzusparen und seine Fahrzeit zu verkürzen. Weiter wird gemäß dem ersten Diagramm 17 der Abriegelgeschwindigkeits-Grenzwert 7 zu dem Zeitpunkt t₂ wieder selbsttätig mittels der Regel- und/oder Steuereinrichtung 3 um den definierten Wert verringert, so dass die Geschwindigkeit 28 des Lastkraftwagens 1 wieder durch die vom Fahrer eingestellten Geschwindigkeits-Grenzwerte 7, 9 begrenzt wird.

Gemäß dem zweiten Diagramm 23 ist die Fahrstrecke des Lastkraftwagens 1 zwischen dem Zeitpunkt t₃ und einem Zeitpunkt t₄ eben. Ab dem Zeitpunkt t₄ bis zu einem Zeitpunkt t₇ fällt die Fahrstrecke mit einer konstanten Steigung ab. Gemäß dem ersten Diagramm 17 wird der Abriegelgeschwindigkeits-Grenzwert 7 zu dem Zeitpunkt t₃ selbsttätig mittels der Regelund/oder Steuereinrichtung 3 um einen definierten Wert verringert, während der Bremsgeschwindigkeits-Grenzwert 9 unverändert bleibt. Auf diese Weise wird die Geschwindigkeit 28 des Lastkraftwagens 1, zeitlich gesehen, unmittelbar vor dem Gefälle verringert, wodurch Kraftstoff eingespart werden kann. Weiter wird gemäß dem ersten Diagramm 17 der Abriegelgeschwindigkeits-Grenzwert 7 zu einem Zeitpunkt t₅ wieder selbsttätig mittels der Regelund/oder Steuereinrichtung 3 um den definierten Wert erhöht, so dass die Geschwindigkeit 28 des Lastkraftwagens 1 wieder durch die vom Fahrer eingestellten Geschwindigkeits-Grenzwerte 7, 9 begrenzt wird.

Gemäß dem ersten Diagramm 17 wird der Bremsgeschwindigkeits-Grenzwert 9 zu dem Zeitpunkt t₆ selbsttätig mittels der Regel- und/oder Steuereinrichtung 3 um einen definierten Wert erhöht, während der Abriegelgeschwindigkeits-Grenzwert 7 unverändert bleibt. Auf diese Weise kann der Fahrer die Geschwindigkeit 28 des hier nun nicht mehr mittels der Brennkraftmaschine 8 angetriebenen Lastkraftwagens 1 durch Nichtbetätigung der Bremseinrichtung 10 des Lastkraftwagens 1 erhöhen. So kann der Fahrer Schwung nehmen, um Kraftstoff einzusparen. Weiter wird gemäß dem ersten Diagramm 17 der Bremsgeschwindigkeits-Grenzwert 9 zu einem Zeitpunkt t₈ wieder selbsttätig mittels der Regel- und/oder Steuereinrichtung 3 um den definierten Wert verringert, so dass die Geschwindigkeit 28 des Lastkraftwagens 1 wieder durch die vom Fahrer eingestellten Geschwindigkeits-Grenzwerte 7, 9 begrenzt wird.

Des Weiteren bildet ein Gaspedal 31 (Fig. 2) des Lastkraftwagens 1 hier beispielhaft eine durch den Fahrer des Lastkraftwagens betätigbare Betätigungseinrichtung aus, durch deren Betätigung die selbsttätige Erhöhung oder Verringerung der Geschwindigkeits-Grenzwerte mittels der Regel- und/oder Steuereinrichtung 3 abgebrochen werden kann. Zudem bildet das Gaspedal 31 hier beispielhaft auch eine, insbesondere haptische, Signaleinrichtung aus, mittels der dem Fahrer des Lastkraftwagens 1 signalisiert wird, dass die Regel- und/oder Steuereinrichtung den Geschwindigkeits-Grenzwert selbsttätig erhöhen oder verringert wird.

### Bezugszeichenliste

- 1: Fahrzeug, Lastkraftwagen
- 3: Regel- und/oder Steuereinrichtung
- 5: Einstelleinrichtung
- 7: Abriegelgeschwindigkeits-Grenzwert
- 8: Brennkraftmaschine
- 9: Bremsgeschwindigkeits-Grenzwert
- 10: Bremseinrichtung
- 11: Verkehrssituation-Erkennungseinrichtung
- 13: Messeinrichtung
- 15: Routenplanungssystem
- 17: erstes Diagramm
- 19: x-Achse
- 21: y-Achse
- 23: zweites Diagramm
- 25: x-Achse
- 27: y-Achse
- 28: Fahrzeuggeschwindigkeit
- 29: Niveau
- 31: Gaspedal
- h: Höhe
- t: Zeit
- t₀: Startzeit
- t₁: erster Zeitpunkt
- t₂: zweiter Zeitpunkt
- t₃: dritter Zeitpunkt
- t₄: vierter Zeitpunkt
- t₅: fünfter Zeitpunkt
- t₆: sechster Zeitpunkt
- t₇: siebter Zeitpunkt
- t₈: achter Zeitpunkt
- v: Geschwindigkeit

## Patentansprüche

1. Verfahren zur Unterstützung eines Fahrers eines Fahrzeugs, insbesondere eines Nutzfahrzeugs, wobei das Fahrzeug eine Regel- und/oder Steuereinrichtung (3) aufweist, mittels der die Fahrzeuggeschwindigkeit (28) derart begrenzt wird, dass sie wenigstens einen definierten, vom Fahrer des Fahrzeugs (1) eingestellten Geschwindigkeits-Grenzwert (7, 9) nicht überschreitet, **dadurch gekennzeichnet,**
**dass** eine Verkehrssituations-Erkennungseinrichtung (11) vorgesehen ist, mittels der eine zukünftige Verkehrssituation des Fahrzeugs (1) erkannt und/oder erfasst wird,
**dass** die Regel- und/oder Steuereinrichtung (3) beim Erkennen wenigstens einer definierten zukünftigen Verkehrssituation mittels der Verkehrssituations-Erkennungseinrichtung (11) zu einem definierten Zeitpunkt (t₁, t₃, t₆), zeitlich gesehen, vor der definierten zukünftigen Verkehrssituation wenigstens einen vom Fahrer eingestellten Geschwindigkeits-Grenzwert (7, 9) in Abhängigkeit von der definierten zukünftigen Verkehrssituation selbsttätig erhöht oder verringert,
und **dass** die Regel- und/oder Steuereinrichtung (3), zeitlich gesehen, spätestens nach der definierten Verkehrssituation den wenigstens einen erhöhten oder verringerten Geschwindigkeits-Grenzwert (7, 9) selbsttätig wieder auf den vom Fahrer eingestellten Geschwindigkeits-Grenzwert (7, 9) zurückstellt.

2. Verfahren nach Anspruch 1, **dadurch gekennzeichnet, dass** der wenigstens eine Geschwindigkeits-Grenzwert als Abriegelgeschwindigkeits-Grenzwert (7) ausgebildet ist, und dass, sofern das Fahrzeug (1) aktuell mittels einer Antriebseinrichtung (8), insbesondere einer Brennkraftmaschine, des Fahrzeugs (1) zum Antreiben des Fahrzeugs (1) angetrieben wird, die Antriebseinrichtung (8) derart mittels der Regel- und/oder Steuereinrichtung (3) abgeriegelt wird, dass die Fahrzeuggeschwindigkeit (28) den Abriegelgeschwindigkeits-Grenzwert (7) nicht überschreitet.

3. Verfahren nach Anspruch 1 oder 2, **dadurch gekennzeichnet, dass** der wenigstens eine Geschwindigkeits-Grenzwert als Bremsgeschwindigkeits-Grenzwert (9) ausgebildet ist, und dass, sofern das Fahrzeug (1) aktuell nicht mittels einer Antriebseinrichtung (8), insbesondere einer Brennkraftmaschine, des Fahrzeugs (1) zum Antreiben des Fahrzeugs (1) angetrieben wird, eine Bremseinrichtung (8) des Fahrzeugs (1) zum Bremsen des Fahrzeugs (1) derart mittels der Regel- und/oder Steuereinrichtung (3) geregelt und/oder gesteuert wird, dass die Fahrzeuggeschwindigkeit (28) den Bremsgeschwindigkeits-Grenzwert (9) nicht überschreitet.

4. Verfahren nach Anspruch 2 und 3, **dadurch gekennzeichnet, dass** mehrere Geschwindigkeits-Grenzwerte vorgesehen sind, wobei ein Geschwindigkeits-Grenzwert als Abriegelgeschwindigkeits-Grenzwert (7) ausgebildet ist, und wobei ein Geschwindigkeits-Grenzwert als Bremsgeschwindigkeits-Grenzwert (9) ausgebildet ist, wobei bevorzugt vorgesehen ist, dass der Bremsgeschwindigkeits-Grenzwert (9) größer ist als der Abriegelgeschwindigkeits-Grenzwert (7).

5. Verfahren nach einem der vorhergehenden Ansprüche, **dadurch gekennzeichnet, dass** die wenigstens eine definierte zukünftige Verkehrssituation ein zukünftig mit dem Fahrzeug (1) erreichter Fahrstreckenabschnitt ist, bei dem die Fahrzeuggeschwindigkeit (28) verringert werden soll, dass die Regel- und/oder Steuereinrichtung (3), zeitlich gesehen, vor einer derartigen Verkehrssituation wenigstens einen Geschwindigkeits-Grenzwert (7, 9) selbsttätig verringert, und dass die Regel- und/oder Steuereinrichtung (3), zeitlich gesehen, unmittelbar nach einer derartigen Verkehrssituation den Geschwindigkeits-Grenzwert (7, 9) selbsttätig wieder auf den vom Fahrer eingestellten Geschwindigkeits-Grenzwert (7, 9) zurückstellt.

6. Verfahren nach einem der vorhergehenden Ansprüche, **dadurch gekennzeichnet, dass** die wenigstens eine definierte zukünftige Verkehrssituation eine zukünftige Erhöhung und/oder Verringerung der Steigung der Fahrstrecke des Fahrzeugs (1) ist, wobei bevorzugt vorgesehen ist, dass die Regel- und/oder Steuereinrichtung (3), zeitlich gesehen, unmittelbar vor einer derartigen Verkehrssituation oder während einer derartigen Verkehrssituation wenigstens einen Geschwindigkeits-Grenzwert (7, 9) selbsttätig wieder auf den vom Fahrer eingestellten Geschwindigkeits-Grenzwert (7, 9) zurückstellt.

7. Verfahren nach einem der vorhergehenden Ansprüche, **dadurch gekennzeichnet, dass** wenigstens eine durch den Fahrer des Fahrzeugs (1) betätigbare Betätigungseinrichtung (31) vorgesehen ist, durch deren Betätigung die selbsttätige Erhöhung oder Verringerung des Geschwindigkeits-Grenzwerts (7, 9) mittels der Regel- und/oder Steuereinrichtung (3) abgebrochen wird, wobei bevorzugt vorgesehen ist, dass die Betätigungseinrichtung (31) als Gaspedal des Fahrzeugs (1) ausgebildet ist.

8. Verfahren nach einem der vorhergehenden Ansprüche, **dadurch gekennzeichnet, dass** eine, insbesondere haptische, Signaleinrichtung (31) vorgesehen ist, mittels der dem Fahrer des Fahrzeugs (1) signalisiert wird, dass die Regel- und/oder Steuereinrichtung (3) den Geschwindigkeits-Grenzwert (7, 9) selbsttätig erhöht oder verringert hat und/oder dass die Regel- und/oder Steuereinrichtung (3) den Geschwindigkeits-Grenzwert (7, 9) zukünftig selbsttätig erhöhen oder verringern wird, wobei bevorzugt vorgesehen ist, dass die Signaleinrichtung (31) als Gaspedal des Fahrzeugs (1) ausgebildet ist.

9. Verfahren nach einem der vorhergehenden Ansprüche, **dadurch gekennzeichnet, dass** die Verkehrssituations-Erkennungseinrichtung (11) datenübertragend mit einem Routenplanungssystem (15) des Fahrzeugs (1) verbunden ist, und/oder dass die Verkehrssituations-Erkennungseinrichtung (11) eine Messeinrichtung (13) aufweist, mittels der die aktuelle Position des Fahrzeugs (1) und/oder die aktuelle Fahrtrichtung des Fahrzeugs (1) ermittelbar sind.

10. Verfahren nach einem der vorhergehenden Ansprüche, **dadurch gekennzeichnet, dass** das eine durch den Fahrer des Fahrzeugs (1) betätigbare Einstelleinrichtung (5), insbesondere ein Taster und/oder ein Schalter, vorgesehen ist, mittels der der wenigstens eine Geschwindigkeits-Grenzwert (7, 9) eingestellt wird.

11. Vorrichtung zur Unterstützung eines Fahrers eines Fahrzeugs, insbesondere eines Nutzfahrzeugs und/oder zur Durchführung eines Verfahrens nach einem der vorhergehenden Ansprüche, wobei das Fahrzeug (1) eine Regel- und/oder Steuereinrichtung (3) aufweist, mittels der Fahrzeuggeschwindigkeit (28) derart begrenzbar ist, dass sie wenigstens einen definierten, von dem Fahrer des Fahrzeugs (1) eingestellten Geschwindigkeits-Grenzwert (7, 9) nicht überschreitet, **dadurch gekennzeichnet,**
**dass** eine Verkehrssituations-Erkennungseinrichtung (11) vorgesehen ist, mittels der eine zukünftige Verkehrssituation des Fahrzeugs (1) erkennbar und/oder erfassbar ist,
**dass** mittels der Regel- und/oder Steuereinrichtung (3) beim Erkennen wenigstens einer definierten zukünftigen Verkehrssituation mittels der Verkehrssituations-Erkennungseinrichtung (11) zu einem definierten Zeitpunkt (t₁, t₃, t₆), zeitlich gesehen, vor der definierten zukünftigen Verkehrssituation wenigstens einen vom Fahrer eingestellten Geschwindigkeits-Grenzwert (7, 9) in Abhängigkeit von der definierten zukünftigen Verkehrssituation selbsttätig erhöhbar oder verringerbar ist, und
**dass** mittels der Regel- und/oder Steuereinrichtung (3), zeitlich gesehen, spätestens nach der definierten Verkehrssituation der wenigstens eine erhöhte oder verringerte Geschwindigkeits-Grenzwert (7, 9) selbsttätig wieder auf den vom Fahrer eingestellten Geschwindigkeits-Grenzwert (7, 9) zurückstellbar ist.

12. Fahrzeug, insbesondere Nutzfahrzeug, zur Durchführung eines Verfahrens nach einem der Ansprüche 1 bis 10 und/oder mit einer Vorrichtung nach Anspruch 11.

## Claims

1. Method for assisting a driver of a vehicle, in particular of a commercial vehicle, wherein the vehicle has a closed-loop and/or open-loop control device (3) by means of which the vehicle speed (28) is limited in such a manner that it does not exceed at least one defined speed limit value (7, 9) set by the driver of the vehicle (1), **characterized**
**in that** a traffic situation identification device (11) is provided by means of which a future traffic situation of the vehicle (1) is identified and/or detected,
**in that**, when at least one defined future traffic situation is identified by means of the traffic situation identification device (11), the closed-loop and/or open-loop control device (3) at a defined time (t₁, t₃, t₆), in terms of time, before the defined future traffic situation automatically increases or reduces at least one speed limit value (7, 9), set by the driver, depending on the defined future traffic situation,
and **in that** the closed-loop and/or open-loop control device (3), in terms of time, at the latest after the defined traffic situation automatically resets the at least one increased or reduced speed limit value (7, 9) again to the speed limit value (7, 9) set by the driver.

2. Method according to Claim 1, **characterized in that** the at least one speed limit value is configured as a blocking speed limit value (7), and **in that**, if the vehicle (1) is currently being driven by means of a drive device (8), in particular an internal combustion engine, of the vehicle (1) for driving the vehicle (1), the drive device (8) is blocked by means of the closed-loop and/or open-loop control device (3) in such a manner that the vehicle speed (28) does not exceed the blocking speed limit value (7).

3. Method according to Claim 1 or 2, **characterized in that** the at least one speed limit value is configured as a brake speed limit value (9), and **in that**, if the vehicle (1) is currently not being driven by means of a drive device (8), in particular an internal combustion engine, of the vehicle (1) for driving the vehicle (1), a brake device (8) of the vehicle (1) for braking the vehicle (1) is regulated and/or controlled by means of the closed-loop and/or open-loop control device (3) in such a manner that the vehicle speed (28) does not exceed the brake speed limit value (9).

4. Method according to Claims 2 and 3, **characterized in that** a plurality of speed limit values are provided, wherein one speed limit value is configured as a blocking speed limit value (7), and wherein one speed limit value is configured as a brake speed limit value (9), wherein it is preferably provided that the brake speed limit value (9) is greater than the blocking speed limit value (7).

5. Method according to one of the preceding claims, **characterized in that** the at least one defined future traffic situation is a route section which is reached in the future by the vehicle (1) and in which the vehicle speed (28) is to be reduced, **in that** the closed-loop and/or open-loop control device (3) automatically reduces at least one speed limit value (7, 9), in terms of time, before such a traffic situation, and **in that** the closed-loop and/or open-loop control device (3) in terms of time directly after such a traffic situation automatically resets the speed limit value (7, 9) again to the speed limit value (7, 9) set by the driver.

6. Method according to one of the preceding claims, **characterized in that** the at least one defined future traffic situation is a future increase and/or decrease in the slope of the route taken by the vehicle (1), wherein it is preferably provided that the closed-loop and/or open-loop control device (3) in terms of time immediately before such a traffic situation or during such a traffic situation automatically resets at least one speed limit value (7, 9) again to the speed limit value (7, 9) set by the driver.

7. Method according to one of the preceding claims, **characterized in that** at least one actuating device (31) is provided which can be actuated by the driver of the vehicle (1) and by means of the actuation of which the automatic increase or decrease in the speed limit value (7, 9) by means of the closed-loop and/or open-loop control device (3) is discontinued, wherein it is preferably provided that the actuating device (31) is configured as an accelerator pedal of the vehicle (1).

8. Method according to one of the preceding claims, **characterized in that** an, in particular haptic, signal device (31) is provided by means of which it is signalled to the driver of the vehicle (1) that the closed-loop and/or open-loop control device (3) has automatically increased or reduced the speed limit value (7, 9), and/or **in that** the closed-loop and/or open-loop control device (3) will automatically increase or reduce the speed limit value (7, 9) in the future, wherein it is preferably provided that the signal device (31) is configured as an accelerator pedal of the vehicle (1).

9. Method according to one of the preceding claims, **characterized in that** the traffic situation identification device (11) is connected in a data-transmitting manner to a route planning system (15) of the vehicle (1), and/or **in that** the traffic situation identification device (11) has a measuring device (13) by means of which the current position of the vehicle (1) and/or the current direction of travel of the vehicle (1) can be determined.

10. Method according to one of the preceding claims, **characterized in that** a setting device (5) which can be actuated by the driver of the vehicle (1), in particular a pushbutton and/or a switch, is provided by means of which the at least one speed limit value (7, 9) is set.

11. Apparatus for assisting a driver of a vehicle, in particular of a commercial vehicle and/or for carrying out a method according to one of the preceding claims, wherein the vehicle (1) has a closed-loop and/or open-loop control device (3) by means of which the vehicle speed (28) can be limited in such a manner that it does not exceed at least one defined speed limit value (7, 9) set by the driver of the vehicle (1), **characterized**
**in that** a traffic situation identification device (11) is provided by means of which a future traffic situation of the vehicle (1) can be identified and/or can be detected,
**in that**, when at least one defined future traffic situation is identified by means of the traffic situation identification device (11), at a defined time (t₁, t₃, t₆) in terms of time before the defined future traffic situation, at least one speed limit value (7, 9), set by the driver, can be automatically increased or reduced by means of the closed-loop and/or open-loop control device (3) depending on the defined future traffic situation, and
**in that** in terms of time at the latest after the defined traffic situation, the at least one increased or reduced speed limit value (7, 9) can be automatically reset again by means of the closed-loop and/or open-loop control device (3) to the speed limit value (7, 9) set by the driver.

12. Vehicle, in particular commercial vehicle, for carrying out a method according to one of Claims 1 to 10 and/or with an apparatus according to Claim 11.

## Revendications

1. Procédé d'assistance d'un conducteur de véhicule, notamment de véhicule utilitaire, le véhicule comportant un dispositif de régulation et/ou de commande (3) permettant de limiter la vitesse (28) du véhicule de manière à ce qu'elle ne dépasse pas au moins une valeur limite de vitesse définie (7, 9) réglée par le conducteur du véhicule (1), **caractérisé en ce que**
un dispositif de reconnaissance de situation de trafic (11) est prévu qui permet de reconnaître et/ou détecter une situation de trafic future du véhicule (1),
lors de la reconnaissance d'au moins une situation de trafic future définie, le dispositif de régulation et/ou de commande (3) augmente ou diminue automatiquement au moins une valeur limite de vitesse définie (7, 9), réglée par le conducteur, en fonction de la situation de trafic future définie, temporellement à un instant défini (t₁, t₃, t₆) avant la situation de trafic future définie au moyen du dispositif de reconnaissance de situation de trafic (11),
et, temporellement au plus tard après la situation de trafic définie, le dispositif de régulation et/ou de commande (3) réinitialise automatiquement l'au moins une valeur limite de vitesse augmentée ou diminuée (7, 9) à la valeur limite de vitesse (7, 9) définie par le conducteur.

2. Procédé selon la revendication 1, **caractérisé en ce que** l'au moins une valeur limite de vitesse est conçue comme une valeur limite de vitesse de verrouillage (7), et **en ce que**, à condition que le véhicule (1) ne soit pas entraîné actuellement au moyen d'un dispositif d'entraînement (8), en particulier d'un moteur à combustion interne, du véhicule (1) destiné à entraîner le véhicule (1), le dispositif d'entraînement (8) est verrouillé au moyen du dispositif de réglage et/ou de commande (3) de manière à ce que la vitesse (28) du véhicule ne dépasse pas la valeur limite de vitesse de verrouillage (7).

3. Procédé selon la revendication 1 ou 2, **caractérisé en ce que** l'au moins une valeur limite de vitesse est conçue comme une valeur limite de vitesse de freinage (9), et ce que, à condition que le véhicule (1) ne soit pas entraîné actuellement par un dispositif d'entraînement (8), notamment un moteur à combustion interne, du véhicule (1) destiné à entraîner le véhicule (1), un dispositif de freinage (8) du véhicule (1) régulé et/ou commandé pour freiner le véhicule (1) au moyen du dispositif de régulation et/ou de commande (3) de manière à ce que la vitesse (28) du véhicule ne dépasse pas la valeur limite de vitesse de freinage (9).

4. Procédé selon les revendications 2 et 3, **caractérisé en ce qu'**une pluralité de valeurs limites de vitesse sont prévues, une valeur limite de vitesse étant conçue comme une valeur limite de vitesse de verrouillage (7), et une valeur limite de vitesse étant conçue comme valeur limite de vitesse de freinage (9), la valeur limite de vitesse de freinage (9) étant de préférence prévue pour être supérieure à la valeur limite de vitesse de verrouillage (7).

5. Procédé selon l'une des revendications précédentes, **caractérisé en ce que** l'au moins une situation de trafic future définie est une portion d'itinéraire, atteinte dans le futur par le véhicule (1), dans laquelle la vitesse (28) du véhicule doit être réduite, **en ce que** le dispositif de régulation et/ou de commande (3) réduit automatiquement au moins une valeur limite de vitesse (7, 9) temporellement avant une telle situation de trafic, et **en ce que** le dispositif de régulation et/ou de contrôle (3) réinitialise, temporellement immédiatement après une telle situation de trafic, la valeur limite de vitesse (7, 9) automatiquement à la valeur limite de vitesse (7, 9) réglée par le conducteur.

6. Procédé selon l'une des revendications précédentes, **caractérisé en ce que** l'au moins une situation de trafic future définie est une augmentation et/ou diminution future de la pente de l'itinéraire du véhicule (1), le dispositif de régulation et/ou de commande (3) étant de préférence prévu pour réinitialiser, temporellement immédiatement avant une telle situation de trafic ou pendant une telle situation de trafic, au moins une valeur limite de vitesse (7, 9) automatiquement à la valeur limite de vitesse (7, 9) réglée par le conducteur.

7. Procédé selon l'une des revendications précédentes, **caractérisé en ce qu'**au moins un dispositif d'actionnement (31), actionnable par le conducteur du véhicule (1), est prévu dont l'actionnement permet d'interrompre l'augmentation ou la diminution automatique de la valeur limite de vitesse (7, 9) au moyen du dispositif de réglage et/ou de commande (3), le dispositif d'actionnement (31) étant de préférence prévu pour être réalisé sous la forme d'une pédale d'accélérateur du véhicule (1).

8. Procédé selon l'une des revendications précédentes, **caractérisé en ce qu'**un dispositif de signalisation, notamment haptique (31), est prévu qui permet de signaler au conducteur du véhicule (1) que le dispositif de régulation et/ou de commande (3) a augmenté ou diminué automatiquement la valeur limite de vitesse (7, 9) et/ou que le dispositif de régulation et/ou de commande (3) augmentera ou diminuera automatiquement la valeur limite de vitesse (7, 9) à l'avenir, le dispositif de signalisation (31) étant de préférence prévu pour être réalisé sous la forme d'une pédale d'accélérateur du véhicule (1).

9. Procédé selon l'une des revendications précédentes, **caractérisé en ce que** le dispositif de reconnaissance de situation de trafic (11) est relié à un système de planification d'itinéraire (15) du véhicule (1) par un moyen de transmission de données, et/ou **en ce que** le dispositif de reconnaissance de situation de trafic (11) comporte un dispositif de mesure (13) qui permet de déterminer la position actuelle du véhicule (1) et/ou le sens de déplacement actuel du véhicule (1).

10. Procédé selon l'une des revendications précédentes, **caractérisé en ce qu'**un dispositif de réglage (5), notamment un bouton et/ou un interrupteur, actionnable par le conducteur du véhicule (1), est prévu qui permet de régler au moins une valeur limite de vitesse (7, 9).

11. Dispositif d'assistance d'un conducteur d'un véhicule, notamment d'un véhicule utilitaire et/ou de mise en oeuvre d'un procédé selon l'une des revendications précédentes, le véhicule (1) comportant un dispositif de régulation et/ou de commande (3) qui permet de limiter la vitesse (28) du véhicule de manière à ce qu'elle ne dépasse pas au moins une valeur limite de vitesse définie (7, 9) réglée par le conducteur du véhicule (1), **caractérisé en ce que**
un dispositif de reconnaissance de situation de trafic (11) est prévu qui permet de reconnaître et/ou détecter une situation de trafic future du véhicule (1),
lors de la reconnaissance d'au moins une situation future de trafic définie au moyen du dispositif de reconnaissance de situation de trafic (11), au moins une valeur limite de vitesse (7, 9), réglée par le conducteur, peut être augmentée ou diminuée automatiquement en fonction de la situation de trafic future définie au moyen du dispositif de régulation et/ou de commande (3), temporellement à un instant défini (t₁, t₃, t₆) avant la situation de trafic future définie, et
l'au moins une valeur limite de vitesse augmentée ou diminuée (7, 9) peut être réinitialisée automatiquement à la valeur limite de vitesse (7, 9), réglée par le conducteur au moyen du dispositif de régulation et/ou de commande (3), temporellement au plus tard après la situation de trafic définie.

12. Véhicule, notamment véhicule utilitaire, destiné à la mise en œuvre d'un procédé selon l'une des revendications 1 à 10 et/ou comprenant un dispositif selon la revendication 11.
